# EUROPÄISCHE PATENTSCHRIFT

(11) **EP 1 256 507 B1**
(45) Veröffentlichungstag und Bekanntmachung des Hinweises auf die Patenterteilung: **30.08.2006**
(21) Anmeldenummer: 02007806.9
(22) Anmeldetag: 06.04.2002
(51) Int. Cl.: B62D 6/00, B62D 6/04, B62D 5/04, B62D 117/00

(54) **Lenksystem für ein Kraftfahrzeug**
Steering system for a motor vehicle
Système de direction pour véhicule automobile

(30) Priorität: 08.05.2001 DE 10122153
(43) Veröffentlichungstag der Anmeldung: 13.11.2002
(60) Teilanmeldung: 04001415.1
(73) Patentinhaber: Bayerische Motoren Werke Aktiengesellschaft, 80809 München (DE)
(72) Erfinder: Pauly, Axel, 85757 Karlsfeld (DE); Fleck, Reidar, 80995 München (DE)

(56) Entgegenhaltungen:
- EP-A- 0 791 522
- DE-A- 4 232 256
- PATENT ABSTRACTS OF JAPAN Bd. 1995, Nr. 09, 31. Oktober 1995 (1995-10-31) & JP 7 149251 A (MAZDA MOTOR CORP), 13. Juni 1995 (1995-06-13)
- PATENT ABSTRACTS OF JAPAN Bd. 1997, Nr. 02, 28. Februar 1997 (1997-02-28) & JP 8 268309 A (HONDA MOTOR CO LTD), 15. Oktober 1996 (1996-10-15)

## Beschreibung

Die Erfindung betrifft die Regelung der Rückstell-Kraft- oder des Rückstellmomentes in einem Lenksystem für ein Kraftfahrzeug, mit einer vom Fahrer zu bedienenden Lenkhandhabe, insbesondere einem Lenkrad, wobei die Lenkhandhabe über ein Servosystem mit veränderbarer Unterstützung letztlich auf einen Radwinkelsteller, der mit zumindest einem lenkbaren Rad des Fahrzeugs verbunden ist, einwirkt, und wobei in die Lenkhandhabe in Abhängigkeit von Randbedingungen, unter anderem in Abhängigkeit von der vom Fahrer initiierten Betätigungsgeschwindigkeit der Lenkhandhabe, ein(e) veränderbare(s) Rückstellkraft oder Rückstellmoment eingespeist wird. Dabei kann die Rückstellkraft oder das Rückstellmoment auch als Betätigungskraft oder Betätigungsmoment bezeichnet werden. Zum technischen Umfeld wird neben der DE 42 07 719 A1 und neben dem sog. Servotronic-Lenksystem der ZF Friedrichshafen AG auf die EP 0 791 522 A2 verwiesen.

Es ist Stand der Technik, bei Servolenkungen das vom Fzg.-Fahrer am Lenkrad oder allgemein an einer sog. Lenkhandhabe wahrgenommene Rückstellmoment von der Höhe des fahrwerkseitigen Radrückstellmomentes und der Fahrzeuggeschwindigkeit abhängig darzustellen, um die Ergonomie der Lenkung zu verbessern. Dies erfolgt bei den bekannten hydraulischen Servolenksystemen durch entsprechende Ausgestaltung der Charakteristik der Servoventile sowie durch geeignete elektrohydraulische Zusatzeinrichtungen. Bei elektrischen Servolenkungen und bei elektronisch geregelten Hydrolenkungen erfolgt die Variation des Rückstellmomentes durch entsprechende Ausgestaltung des zugehörigen elektronischen Regelalgorithmus. Gleiches gilt für die Kombination einer regelbaren Servolenkung mit einer sog. Überlagerungslenkung. Bei den by-wire-Lenksystemen, bei welchen die Lenkhandhabe über einen elektronischen Regelkreis auf einen geeigneten Aktuator einwirkt, der den Radwinkelsteller entsprechend betätigt, und auf welche sich die vorliegende Erfindung ebenso bezieht wie die vorhergehend genannten Lenksysteme, wird an der Lenkhandhabe für die Erzeugung der Rückstellkraft bzw. des Rückstellmomentes ein geeigneter Kraft- oder Momentensimulator vorgesehen.

Aus der eingangs genannten EP 0 791 522 A2 ist eine elektromotorische Servolenkung mit den Merkmalen des Oberbegriffes des Anspruchs 1 bekannt, bei der eine am Lenkrad wirkende sog. Bremskraft, die praktisch der hier genannten Rückstellkraft oder dem hier genannten Rückstellmoment entspricht, in Abhängigkeit von der Betätigungsgeschwindigkeit des Lenkrads (= der Lenkhandhabe) verändert wird. Hiermit soll eine Ruhestellung des Lenkrads besser erreicht bzw. die Konvergenz in diese Ruhestellung hinein verbessert werden.

An einer Rückstell-Kraft- oder Momenten-Regelung in einem Lenksystem nach dem Oberbegriff des Anspruchs 1 weitere Verbesserungen aufzuzeigen, ist Aufgabe der vorliegenden Erfindung.
Die Lösung dieser Aufgabe ist dadurch gekennzeichnet, dass mit Annäherung an eine systemspezifische Grenz-Lenkgeschwindigkeit des Radwinkelstellers eine zusätzliche Rückstellkraft- oder Rückstellmomenten-Komponente in die Lenkhandhabe eingespeist wird. Vorteilhafte Weiterbildungen sind Inhalt der Unteransprüche.

Somit wird das an der Lenkhandhabe für den Fahrer spürbare Lenkradmoment oder allgemein eine Lenkhandhabe-Rückstellkraft von zumindest einer weiteren Zustandsgröße des Lenksystems abhängig gemacht. Im Sinne einer vorteilhaften Weiterbildung kann auch eine Abhängigkeit zu fahrdynamischen Zustandsgrößen bestehen, mit dem Ziel, den Fahrer in schwierigen Fahrsituationen zu unterstützen und somit die Fahrstabilität des Fahrzeugs zu verbessern.

Wie grundsätzlich bekannt, erfolgt zunächst eine Dämpfung ungewollter Lenkbewegungen. Hierzu wird das Lenkrad-Rückstellmoment (oder allgemein eine Lenkhandhabe-Rückstellkraft) so geregelt, dass für den Fahrer der Eindruck einer von der Lenkrad-Winkelgeschwindigkeit abhängenden Dämpfung entsteht, d.h. eine Dämpfung der vom Fahrer initiierten Lenkhandhabe-Bewegung soll in Abhängigkeit von der Betätigungsgeschwindigkeit der Lenkhandhabe erfolgen. Wird bspw. das (übliche) Lenkrad relativ schnell verdreht, so soll ein höheres Rückstellmoment spürbar sein, als wenn das Lenkrad langsamer gedreht wird. Bevorzugt nimmt somit der Betrag der Rückstellkraft oder des Rückstellmomentes ausgehend von der Ruhestellung mit zunehmender Betätigungsgeschwindigkeit der Lenkhandhabe zu.

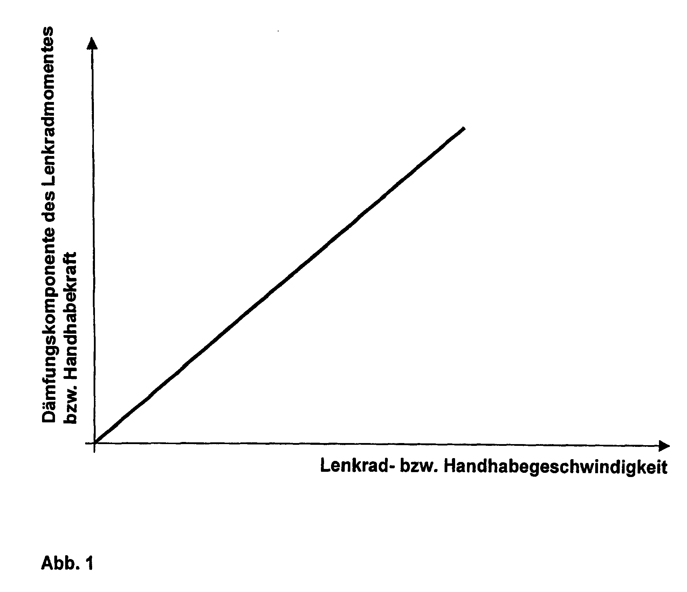

Die beigefügte **Abb.1** zeigt eine mögliche direkt proportionale Abhängigkeit zwischen der in diesem Diagramm auf der Abszisse aufgetragenen Betätigungsgeschwindigkeit des Lenkrads bzw. der Lenkhandhabe und der auf der Ordinate aufgetragenen Dämpfungskomponente des Lenkradmomentes, d.h. dem Rückstellmoment bzw. der Rückstellkraft an der Lenkhandhabe (= sog. Handhabekraft). Mit dieser oder einer ähnlichen Abhängigkeit können ungewollte Lenkbewegungen des Fahrers reduziert und (was besonders spürbar ist) bei höherer Fahrgeschwindigkeit durch Verstärkung der Dämpfung vermieden werden.

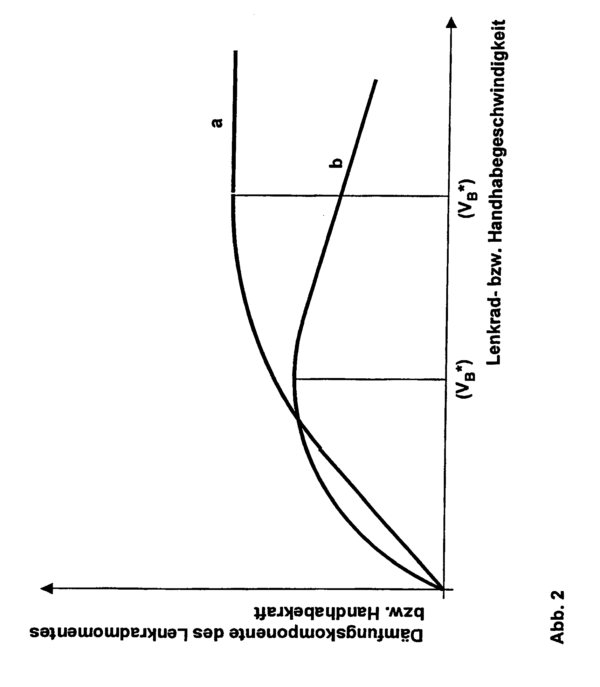

Um den Fahrer beim Ausführen sehr schneller Lenkbewegungen bspw. in Gefahrensituationen nicht zu behindern, kann diese als Funktion der Lenkrad- oder Lenkhandhabe-Betätigungsgeschwindigkeit dargestellte Dämpfung nach oben begrenzt oder mit degressivem Verlauf realisiert werden , so wie dies in der beigefügten **Abb.2** dargestellt ist. Wie ersichtlich nimmt ab Erreichen einer gewissen Grenz-Betätigungsgeschwindigkeit (v_{B}*) der Lenkhandhabe der auf der Ordinate aufgetragene Betrag der Rückstellkraft oder des Rückstellmomentes nicht weiter zu (Variante a in Abb.2) oder sogar ab (Variante b in Abb.2).

Bei schnellen Lenkradbewegungen kann die Leistungsgrenze des elektrischen oder hydraulischen Servomotors des Servolenksystems bzw. bei den by-wire-Lenksystemen die Leistungsgrenze der entsprechenden Aktuatorik erreicht werden. Dieses Problem tritt dabei umso häufiger auf, je direkter die kinematische Übersetzung zwischen der Lenkhandhabe (bspw. einem Lenkrad, einem Steuerhorn oder einem Steuerknüppel) und der zu lenkenden Fzg.-Räder ist. Um dies zu vermeiden werden die derzeitigen Lenksysteme für höhere Radeinschlaggeschwindigkeiten ausgelegt, als dies für die Erfüllung der eigentlichen Lenkfunktion erforderlich ist. Dies ist naturgemäß mit Mehrkosten, Mehrgewicht, höherem Bauraumbedarf und höherem Energiebedarf verbunden.

Daher wird mit der vorliegenden Erfindung vorgeschlagen, dass mit Annäherung an eine systemspezifische Grenz-Lenkgeschwindigkeit des Radwinkelstellers eine zusätzliche Rückstellkraft- oder Rückstellmomenten-Komponente in die Lenkhandhabe eingespeist wird. Hiermit können unerwünscht hohe Lenkrad-Winkelgeschwindigkeiten oder allgemein Lenkhandhabe-Betätigungsgeschwindigkeiten verhindert werden, ohne dass dies vom Fahrer als störend empfunden wird. Zu diesem Zweck wird bevorzugt im Regler des Servosystems ein Algorithmus verwendet, der entweder die Servounterstützung der Servolenkung oder das oder die von einem Lenkrad- bzw. Lenkhandhabe-Simulator erzeugte Rückstellmoment oder Rückstellkraft als Funktion der Lenkwinkelgeschwindigkeit des Lenkrades bzw. der Betätigungsgeschwindigkeit der Lenkhandhabe, bevorzugt jedoch als Funktion der Grenz-Lenkgeschwindigkeit des Radwinkelstellers beeinflusst. Unter der Grenz-Lenkgeschwindigkeit des Radwinkelstellers wird dabei diejenige maximale Lenkeinschlag-Geschwindigkeit des Fahrzeugrades oder der Fahrzeugräder verstanden, die der Radwinkelsteller gerade noch umsetzen kann.

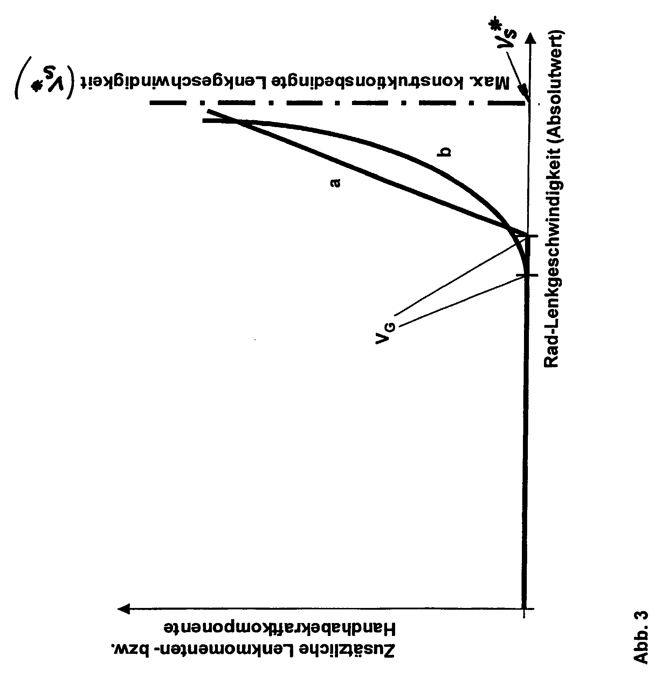

In der beigefügten **Abb.3** sind beispielshalber zwei mögliche derartige Funktionen a, b graphisch in einem Diagramm dargestellt, auf dessen Abszisse die Rad-Lenkgeschwindigkeit, d.h. die Lenkeinschlag-Geschwindigkeit des Fahrzeugrads oder der Fzg.-Räder aufgetragen ist, während die Ordinate die sog. zusätzliche Lenkmomenten- bzw. Handhabekraftkomponente, d.h. die zusätzliche Rückstellkraft- oder Rückstellmomenten-Komponente für die Lenkhandhabe wiedergibt. Die sog. Grenz-Lenkgeschwindigkeit des Radwinkelstellers ist mit vₛ* bezeichnet und zusätzlich als maximale konstruktionsbedingte Lenkgeschwindigkeit beschrieben. Wie dargestellt wird nun mit Annäherung der Rad-Lenkgeschwindigkeit an vₛ* eine zusätzliche Rückstellkraft- oder Rückstellmomenten-Komponente in die Lenkhandhabe eingespeist. Dies erfolgt ab einer gewissen Rad-Lenkgeschwindigkeit v_{G}.

Mit dieser Funktion nimmt somit der Betätigungswiderstand an der Lenkhandhabe für den Fahrer ab Erreichen der gewissen Rad-Lenkgeschwindigkeit v_{G} kontrolliert mit einem weiteren Anstieg der Lenkgeschwindigkeit überproportional zu, d.h. der Fahrer verspürt an der Lenkhandhabe eine Dämpfung zur Begrenzung der maximal erreichbaren Lenkhandhabe-Betätigungsgeschwindigkeit, wobei unter "a" ein möglicher linearer Anstieg und unter "b" ein möglicher progressiver Anstieg dargestellt ist. Auf diese Weise erfolgt wegen des physiologischen Zusammenhangs zwischen Betätigungsgeschwindigkeit und Betätigungskraft eine vom Fahrer nicht als störend bzw. als Fehlfunktion der Lenkung empfundene Begrenzung der Lenkgeschwindigkeit, und die oben beschriebenen Nachteile können somit vermieden werden.

Weiterhin kann eine Regelung der Lenkhandhabe-Rückstellkraft oder des Lenkhandhabe-Rückstellmomentes auch zur Unterstützung des Fahrers bei kritischen Fahrzuständen erfolgen. Grundsätzlich ist es bekannt, dass bei einer Regelung der Fahrstabilität oder der Kurshaltung der Fahrzeug-Fahrer dadurch unterstützt werden kann, dass der Radlenkwinkel bzw. Lenkeinschlagwinkel des Fzg.-Rades oder der Fzg.-Räder zusätzlich von einem Fahrdynamik-Regler bestimmt wird. Dies macht es erforderlich, die mechanische Verbindung zwischen Lenkrad und Vorderräder quasi aufzuschneiden und einen Rechner in den Signalfluss zwischenzuschalten oder mittels eines sog. Überlagerungsaktuators eine ebenfalls von einem Fahrdynamikrechner berechnete Lenkwinkelkomponente zur vom Fahrer initiierten Lenkwinkelkomponente zu addieren.

Wenn - wie in Anspruch 4 angegeben ist - bei einem erfindungsgemäßen Lenksystem mit einem Fahrdynamikregler einer vom Fahrer initiierten Betätigung der Lenkhandhabe ein(e) betragsmäßig geringere(s) Rückstellkraft oder Rückstellmoment entgegengesetzt wird, wenn diese Betätigung vorhersehbar eine Stabilisierung des Fahrzeug-Fahrzustandes zur Folge hat (und somit einer Aktion des Fahrdynamikreglers entspricht), während bei einer Betätigung, die dieses Kriterium nicht erfüllt (und somit einer berechneten Aktion des Fahrdynamik-Reglers widerspricht), ein(e) betragsmäßig größere Rückstellkraft oder Rückstellmoment in die Lenkhandhabe eingespeist wird, kann über das Rückstellmoment bzw. über die Rückstellkraft an der Lenkhandhabe der vom Fahrer vorgegebene Lenkwinkel im Sinne des Fahrdynamik-Reglers beeinflusst werden. Wenn nämlich der Fahrer selbst eine stabilisierende oder kurskorrigierende Bewegung der Lenkhandhabe durchführt, so kann bei günstiger Bewegung durch Reduzierung oder bei ungünstiger Bewegung durch Erhöhung des vom Fahrer verspürten Widerstands diese Lenkkorrektur verstärkt oder abgeschwächt werden.

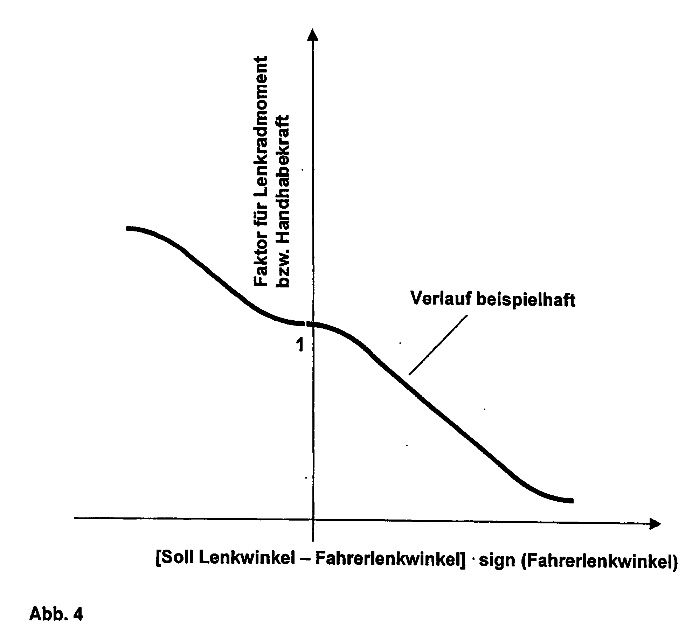

Die beigefügte **Abb.4** zeigt hierfür einen beispielhaften Verlauf, wobei auf der Abszisse dieses Diagramms das Produkt aus der Lenkwinkel-Differenz zwischen dem vom Fahrdynamik-Regler ermittelten sog. Soll-Lenkwinkel und dem vom Fahrer vorgegebenen sog. Fahrerlenkwinkel und der Signum-Funktion des Fahrerlenkwinkels aufgetragen ist, während auf der Ordinate ein bspw. multiplikativer Faktor für das Rückstellmoment bzw. die Rückstellkraft an der Lenkhandhabe aufgetragen ist (im Diagramm als Faktor für Lenkradmoment bzw. Handhabekraft bezeichnet). Zur Signum-Funktion des Fahrerlenkwinkels sei erläutert, dass diese für negative Lenkwinkel-Werte, die bei Betrachtung bspw. auf ein Lenkrad einer Rechtsdrehung desselben entsprechen, den algebraischen Wert "-1" annimmt, während die Signum-Funktion für positive Lenkwinkel-Werte, die bei Betrachtung bspw. auf ein Lenkrad einer Linksdrehung desselben entsprechen, den algebraischen Wert "+1" annimmt.

Bei der Umsetzung der in **Abb.4** beispielhaft dargestellten Funktion können somit bekannte physiologische Zusammenhänge genutzt werden. Die Anpassung des Rückstellmomentes oder der Rückstellkraft wird vom Fahrdynamik-Rechner berechnet und entweder mittels Variation der Servounterstützung bei geregelten Servolenkungen und Überlagerungslenkungen mit geregelter Servounterstützung oder durch entsprechende Ansteuerung eines Lenkmomenten- bzw. Lenkkraftsimulators bei mechanisch entkoppelten steer-by-wire-Lenksystemen erreicht. Die auf diese Weise erzielte günstige Beeinflussung des vom Fahrer erzeugten Lenkwinkels kann allein oder in Kombination mit einer rechnergesteuerten, vom Fahrer unabhängigen Lenkwinkelkomponente erfolgen, um das optimale Verhalten des Gesamtsystems Fahrer/Fahrzeug zu erreichen.

Im Fall der fahrdynamischen Lenkmomentenregelung erfolgt bei Servolenksystemen neben der physiologisch bedingten Beeinflussung des vom Fahrer am Lenkrad eingegebenen Lenkwinkels eine zusätzliche Beeinflussung des Lenkwinkels an den Rädern. Diese zusätzliche korrigierende Lenkwinkelkomponente entsteht durch die Änderung der elastischen Verformung der Übertragungselemente zwischen Lenkrad und Servolenkeinrichtung als Folge der durch den Fahrdynamik-Rechner bewirkten Erhöhung oder Verringerung des Rückstellmomentes am Lenkrad bzw. der Rückstellkraft an der Lenkhandhabe. Im übrigen sei noch darauf hingewiesen, dass eine Vielzahl von Details durchaus abweichend von obigen Erläuterungen gestaltet sein kann, ohne den Inhalt der Patentansprüche zu verlassen.

## Patentansprüche

1. Rückstell-Kraft- oder Momenten-Regelung in einem Lenksystem für ein Kraftfahrzeug mit einer vom Fahrer zu bedienenden Lenkhandhabe, insbesondere einem Lenkrad, wobei die Lenkhandhabe über ein Servosystem mit veränderbarer Unterstützung letztlich auf einen Radwinkelsteller, der mit zumindest einem lenkbaren Rad des Fahrzeugs verbunden ist, einwirkt, und wobei in die Lenkhandhabe in Abhängigkeit von Randbedingungen, unter anderem in Abhängigkeit von der vom Fahrer initiierten Betätigungsgeschwindigkeit der Lenkhandhabe, ein(e) veränderbare(s) Rückstellkraft oder Rückstellmoment eingespeist wird, **dadurch gekennzeichnet,**
**dass** mit Annäherung an eine systemspezifische Grenz-Lenkgeschwindigkeit des Radwinkelstellers eine zusätzliche Rückstellkraft- oder Rückstellmomenten-Komponente in die Lenkhandhabe eingespeist wird.

2. Rückstell-Kraft- oder Momenten-Regelung nach Anspruch 1,
**dadurch gekennzeichnet, dass** der Betrag der Rückstellkraft oder des Rückstellmomentes mit ausgehend von der Ruhestellung zunehmender Betätigungsgeschwindigkeit zunimmt.

3. Rückstell-Kraft- oder Momenten-Regelung nach Anspruch 2,
**dadurch gekennzeichnet, dass** ab Erreichen einer gewissen Grenz-Betätigungsgeschwindigkeit der Lenkhandhabe der Betrag der Rückstellkraft oder des Rückstellmomentes nicht weiter zunimmt oder abnimmt.

4. Rückstell-Kraft- oder Momenten-Regelung nach einem der vorangegangenen Ansprüche sowie mit einem Fahrdynamik-Regler,
**dadurch gekennzeichnet, dass** einer vom Fahrer initiierten Betätigung der Lenkhandhabe ein(e) betragsmäßig geringere(s) Rückstellkraft oder Rückstellmoment entgegengesetzt wird, wenn diese Betätigung vorhersehbar eine Stabilisierung des Fahrzeug-Fahrzustandes zur Folge hat, während bei einer Betätigung, die dieses Kriterium nicht erfüllt, ein(e) betragsmäßig größere Rückstellkraft oder Rückstellmoment in die Lenkhandhabe eingespeist wird.

## Claims

1. A restoring force control or torque control in a steering system for a motor vehicle comprising a steering handle which is to be operated by the driver, especially a steering wheel, wherein the steering handle finally acts via a servo system with variable assistance on a wheel angle adjuster, which is connected to at least one steerable wheel of the vehicle, and wherein a variable restoring force or restoring torque is fed into the steering handle as a function of boundary conditions, *inter alia* as a function of the actuating speed of the steering handle initiated by the driver, **characterised in that** with the approaching of a system-specific limit steering speed of the wheel angle adjuster, an additional restoring force component or restoring torque component is fed into the steering handle.

2. A restoring force control or torque control according to claim 1, **characterised in that** the amount of the restoring force or the restoring torque increases with the actuating speed which increases starting from the rest position.

3. A restoring force control or torque control according to claim 2, **characterised in that** the amount of the restoring force or the restoring torque does not increase or decrease further from reaching a certain limit actuating speed of the steering handle.

4. A restoring force control or torque control according to any one of the preceding claims also comprising a driving dynamics controller, **characterised in that** an actuation of the steering handle initiated by the driver is counteracted by a restoring force or restoring torque which is smaller in terms of amount, when this actuation foreseeably results in a stabilisation of the vehicle driving state, while in the event of an actuation, which does not fulfil this criteria, a larger restoring force or restoring torque in terms of amount is fed into the steering handle.

## Revendications

1. Régulation de la force ou du couple de rappel dans un système de direction pour un véhicule automobile comprenant une manette de direction, en particulier un volant de direction, qui doit être actionnée par le conducteur, la manette de direction agissant finalement, par un système de servocommande à assistance modifiable, sur un système de réglage d'angle du volant relié à au moins une roue directrice du véhicule, et un(e) force de rappel ou couple de rappel modifiable étant entré(e) dans la manette de direction en fonction de conditions limites, entre autres en fonction de la vitesse d'actionnement de la manette de direction qui est initiée par le conducteur,
**caractérisée en ce qu'**
une composante supplémentaire de force de rappel ou de couple de rappel est entrée dans la manette de direction lorsque le système de réglage de l'angle du volant se rapproche d'une vitesse de braquage limite spécifique au système.

2. Régulation de la force ou du couple de rappel selon la revendication 1,
**caractérisée en ce que**
la quantité de la force de rappel ou du couple de rappel augmente lorsque la vitesse d'actionnement augmente à partir de la position de repos.

3. Régulation de la force ou du couple de rappel selon la revendication 2,
**caractérisée en ce que**
lorsque la manette de direction a atteint une certaine vitesse d'actionnement limite, la quantité de force de rappel ou de couple de rappel n'augmente plus ou diminue.

4. Régulation de la force ou du couple de rappel selon l'une des revendications précédentes, et comprenant un contrôle dynamique de trajectoire,
**caractérisée en ce qu'**
un(e) force de rappel ou couple de rappel comparativement plus faible est opposé(e) à un actionnement de la manette de direction initié par le conducteur lorsque cet actionnement a pour conséquence prévisible une stabilisation de la condition de roulage du véhicule, tandis que lors d'un actionnement qui ne remplit pas ce critère, un(e) force de rappel ou couple de rappel comparativement plus grand(e) est entré(e) dans la manette de direction.
